# EUROPÄISCHE PATENTSCHRIFT

(11) **EP 3 902 208 B1**
(45) Veröffentlichungstag und Bekanntmachung des Hinweises auf die Patenterteilung: **09.08.2023**
(21) Anmeldenummer: 21162498.6
(22) Anmeldetag: 15.03.2021
(51) Int. Cl.: H04L 12/42

(54) **BUS-KOPPLER FÜR EIN NETZWERK UND VERFAHREN ZUM BETREIBEN EINES BUS-KOPPLERS**
BUS COUPLER FOR A NETWORK AND METHOD FOR OPERATING A BUS COUPLER
COUPLEUR DE BUS POUR UN RÉSEAU ET PROCÉDÉ DE FONCTIONNEMENT D'UN COUPLEUR DE BUS

(30) Priorität: 21.04.2020 DE 102020110753
(43) Veröffentlichungstag der Anmeldung: 27.10.2021
(73) Patentinhaber: Turck Holding GmbH, 58553 Halver (DE)
(72) Erfinder: Mertens, Marcel, 47249 Duisburg (DE); Knaak, Ludger, 50354 Hürth (DE)
(74) Vertreter: DTS Patent- und Rechtsanwälte Schnekenbühl und Partner mbB

(56) Entgegenhaltungen:
- EP-A1- 1 890 434
- US-A1- 2010 034 204

## Beschreibung

Die Erfindung betrifft einen Bus-Koppler für ein Netzwerk, insbesondere für ein optisches Ringnetzwerk, sowie ein Verfahren zum Betreiben eines Bus-Kopplers für ein Netzwerk, insbesondere ein optisches Ringnetzwerk.

Aus der Automatisierungs- und Steuerungstechnik sind verschiedene Netzwerktypen bekannt, die beispielsweise dazu dienen, von einer bestimmten Einheit aus unterschiedliche Geräte anzusteuern oder von Sensoreinrichtungen erfasste Daten abzurufen.

Bei bekannten Netzwerken, etwa für eine Kommunikation mittels Profibus, weisen zu einem Netzwerk verbundene Koppler Schnittstellen zu weiteren Geräten auf. Die Koppler sind ferner untereinander verbunden und können dabei einen geschlossenen Ring bilden. Von den angeschlossenen Geräten werden Datenpakete, auch als *"Telegramme"* bezeichnet, an einen Koppler übertragen und von diesem an einen weiteren Koppler gesendet. Ein an den weiteren Koppler angeschlossenes weiteres Gerät kann das Telegramm dann empfangen.

Es ist etwa aus der CN 105790843 B bekannt, eine Adresstabelle zu verwenden, welche aus empfangenen und ausgewerteten Telegrammen gebildet wird. Der Koppler erkennt hieraus, ob ein eingehendes Telegramm bereits zuvor weitergeleitet wurde. Allerdings kann hier erst nach Erhalt einer größeren Anzahl an Bytes pro Telegramm eine Weiterleitung erfolgen. Eine sofortige Weiterleitung jedes empfangenen Bytes ist daher nicht möglich.

Aus der EP 1 890 434 A1 ist ein Ringnetzwerk bekannt, bei dem zwei Knoten mit derselben Adresse vorgesehen sind. Die US 2010/034204 A1 beschreibt ein Paketringnetzwerksystem, in dem mehrere Knoten durch zwei Ringlets verbunden sind, die ein Paket in wechselseitig entgegengesetzte Richtungen übertragen.

Ferner kann ein System so ausgebildet sein, dass auch bei einer Ringkonfiguration praktisch nie der gesamte Ring genutzt wird. Dabei wird insbesondere ein Ring von optischen Verbindungen aufgebaut, der jedoch in der Praxis wie eine Linienstruktur betrieben wird. Die letzte Verbindung zum Schließen des Ringes wird nur dann verwendet, wenn eine andere Linie ausfällt. Es erfolgt eine Umschaltung über ein Mastergerät in dem Ringnetzwerk. Da hierbei Daten nie entlang eines geschlossenen Rings gesendet werden, wird bei dieser Lösung keine Adressierung benötigt. Es kommt zu langen Umschaltzeiten, da Fehler erst beim Mastergerät erkannt werden müssen.

Es ist die Aufgabe der Erfindung, einen Bus-Koppler für ein Netzwerk, insbesondere ein optisches Ringnetzwerk, und ein Verfahren zu seinem Betrieb bereitzustellen, die eine besonders effiziente Nutzung einer als Bus genutzten Ringkonfiguration ermöglichen.

Diese Aufgabe wird durch einen Bus-Koppler mit den Merkmalen des Anspruchs 1 gelöst. Vorteilhafte Ausgestaltungen und Weiterbildungen der Erfindung sind in den abhängigen Ansprüchen angegeben.

Der Bus-Koppler für ein Netzwerk, insbesondere für ein optisches Ringnetzwerk, umfasst eine Bus-Teilnehmer-Schnittstelle zum datentechnischen Verbinden mit zumindest einem Bus-Teilnehmer-Gerät, eine Bus-Empfangsschnittstelle zum Empfangen von Bus-Eingangsdaten über eine Bus-Leitung und eine Bus-Sendeschnittstelle zum Senden von Bus-Ausgangsdaten über die Bus-Leitung. Er umfasst ferner eine Steuereinheit, die dazu eingerichtet ist, anhand von über die Bus-Teilnehmer-Schnittstelle empfangenen Teilnehmer-Eingangsdaten Bus-Ausgangsdaten zu erzeugen, wobei die Bus-Ausgangsdaten Bus-Steuerungsdaten umfassen, und mittels der Bus-Sendeschnittstelle an einen weiteren Bus-Koppler zu übertragen. Dabei ist die Steuereinheit ferner dazu eingerichtet, anhand der mittels der Bus-Empfangsschnittstelle empfangenen Bus-Eingangsdaten, die Bus-Steuerungsdaten umfassen, ein Steuersignal zu bestimmen und anhand des bestimmten Steuersignals eine Weiterleitung der Bus-Eingangsdaten an den weiteren Bus-Koppler auszuführen.

Dadurch kann vorteilhafterweise die Übertragung und Weiterleitung von Daten innerhalb des Netzwerks besonders effizient gesteuert werden.

Bei der Erfindung leitet der Bus-Koppler insbesondere von dem Bus-Teilnehmer-Gerät empfangene Daten, insbesondere ein sogenanntes Telegramm, nicht einfach über die Bus-Leitung weiter an weitere Teilnehmergeräte. Stattdessen werden die Teilnehmer-Eingangsdaten um die Bus-Steuerungsdaten ergänzt, welche die folgende Weiterleitung durch die Bus-Leitung steuern. Die vom Bus-Koppler an den nächsten Bus-Koppler übertragenen Bus-Ausgangsdaten werden also auf Basis der Teilnehmer-Eingangsdaten erzeugt und umfassen ferner die Bus-Steuerungsdaten. Insbesondere sind die Steuerungsdaten so gebildet, dass der Bus-Koppler erkennen kann, wenn es das Telegramm erneut empfängt, diesmal mittels der Bus-Empfangsschnittstelle, weil es das Netzwerk durchlaufen hat.

Ein Vorteil der Erfindung ist die direkte Weiterleitung der Daten in einem insbesondere als Ring konfigurierten Netzwerk ohne Auswerten der Daten, insbesondere hinsichtlich eines Absenders und/oder Empfängers. Die Entscheidung, ein bestimmtes Telegramm weiterzuleiten oder aus dem Ring zu entfernen, kann insbesondere bereits nach dem Empfangen und Auswerten des ersten Bytes getroffen werden. Dabei wird ferner sichergestellt, dass Daten nicht im Ring weitergeleitet werden, wenn dies nicht mehr erforderlich ist. Auf diese Weise wird der Ring nicht durch überflüssige Daten blockiert, insbesondere auch nach dem Ausfall eines Geräts, das bei bekannten Systemen für das Beenden der Weiterleitung verantwortlich ist.

Insbesondere ist vorgesehen, dass ein Telegramm so im Netzwerk gesendet wird, dass die Bus-Steuerungsdaten den Daten des Telegramms, insbesondere als den Teilnehmer-Eingangsdaten, vorgelagert sind. Die übertragenen Daten sind dann etwa so aufgebaut, dass vor dem Senden der zu übertragenden Teilnehmer-Eingangsdaten die Bus-Steuerungsdaten gesendet werden. Beispielweise können die Bus-Steuerungsdaten eine Länge von einem Byte aufweisen und insbesondere als "Steuerbyte" ausgebildet sein, sodass sie in die typischerweise vorgesehene Lücke von 1,5 Byte zwischen mehreren Telegrammen innerhalb des Netzwerks eingefügt werden können. Die Bus-Steuerungsdaten sind dabei innerhalb der Bus-Ausgangsdaten insbesondere so angeordnet, dass sie vor den Daten eines zu übertragenden Telegramms gesendet und von einem anderen Bus-Koppler empfangen werden. Auf diese Weise wird sichergestellt, dass die Bus-Koppler des Netzwerks auch bei einer Übertragung Byte für Byte bereits anhand der zuerst empfangenen Bus-Steuerungsdaten entscheiden kann, ob diese Daten an den nächsten Bus-Koppler weitergeleitet werden sollen oder nicht.

Die Bus-Steuerungsdaten können eine andere Länge aufweisen, etwa mehrere Bytes, beispielsweise um ein System mit einer mehrstufige Steuerung der Weiterleitung zu implementieren.

Bei dem Netzwerk wird die Bus-Leitung durch zumindest zwei miteinander gekoppelte Bus-Koppler gebildet, wobei die Bus-Koppler insbesondere in Reihe miteinander datentechnisch verbunden sind. Die Verbindungen zwischen einzelnen Bus-Kopplern werden als Segmente der Bus-Leitung bezeichnet.

Die Bus-Koppler sind dazu eingerichtet, Signale von angeschlossenen Bus-Teilnehmer-Geräten zu empfangen und über die Bus-Leitung, an welche die Bus-Koppler angeschlossen sind, ein sogenanntes Telegramm zu senden sowie Telegramme über die Bus-Leitung zu empfangen und an die Bus-Teilnehmer-Geräte auszugeben, die wiederum an die Bus-Koppler angeschlossen sind. Sie sind ferner dazu eingerichtet, ein über die Bus-Leitung von einem anderen Bus-Koppler empfangenes Telegramm an einen weiteren Bus-Koppler weiterzuleiten, sodass das Telegramm das Netzwerk von einem Bus-Koppler zum nächsten durchläuft, bis es von einem Bus-Koppler nicht mehr weitergeleitet und dadurch aus dem Netzwerk gelöscht wird. Das Unterbrechen der Weiterleitung beziehungsweise das Löschen eines Telegramms aus dem Netzwerk erfolgt insbesondere unter vorgegebenen Voraussetzungen; die Weiterleitung des Telegramms entlang der Bus-Leitung von einem Bus-Koppler zum nächsten wird dadurch insbesondere unterbrochen.

Die Steuereinheit ist ferner dazu eingerichtet, die mittels der Bus-Empfangsschnittstelle empfangenen Bus-Eingangsdaten in Abhängigkeit von dem Steuersignal byteweise an den weiteren Bus-Koppler zu übertragen.

Dies erlaubt vorteilhafterweise eine besonders schnelle und effiziente Weiterleitung eines Telegramms durch das Netzwerk. Die Weiterleitung von Daten, insbesondere eines Telegramms, in dem Netzwerk durch den Bus-Koppler erfolgt dabei insbesondere "Byte für Byte", das heißt, der Bus-Koppler sendet das Telegramm nicht erst weiter, nachdem er ein größeres Datenpaket oder das gesamte Telegramm empfangen und gegebenenfalls analysiert hat. Vielmehr werden die einzelnen Bytes des Telegramms möglichst direkt an den nächsten Bus-Koppler weitergeleitet.

Werden die Bus-Koppler in einer Ring-Konfiguration gekoppelt, so ist der Ausgang eines ersten Bus-Kopplers mit dem Eingang eines zweiten Bus-Kopplers gekoppelt; ferner ist der Ausgang des zweiten Bus-Kopplers mit dem Eingang des ersten Bus-Kopplers gekoppelt. Wenn das Netzwerk weitere Bus-Koppler umfasst, so sind diese beispielsweise zwischen den ersten und zweiten Bus-Koppler geschaltet, beispielsweise indem der Ausgang des ersten Bus-Kopplers mit dem Eingang des weiteren Bus-Kopplers und der Ausgang des weiteren Bus-Kopplers mit dem Eingang des zweiten Bus-Kopplers gekoppelt sind; ferner kann ein weiterer Bus-Koppler zwischen den Ausgang des zweiten Bus-Kopplers und den Eingang des ersten Bus-Kopplers geschaltet sein. Das heißt, die Bus-Leitung weist eine Ringstruktur auf, insbesondere als geschlossener Ring.

Ein Telegramm wird in dem Netzwerk in Ring-Konfiguration von einem ersten Bus-Koppler an den nächsten und von diesem weiter übertragen, bis es den ersten Bus-Koppler wieder erreicht; ohne eine Abbruchbedingung wird das Telegramm somit ständig weiter entlang der Ringstruktur der Bus-Leitung übertragen. Mit der Zeit können sich somit Telegramme in dem Netzwerk ansammeln, welche die zur Verfügung stehende Bandbreite und die Kapazität der angeschlossenen Geräte beanspruchen.

Als Abbruchbedingung kann beispielsweise definiert werden, dass ein Bus-Koppler ein Telegramm nicht mehr weiterleitet, wenn er dieses bereits einmal weitergeleitet hat. Hierzu muss der Bus-Koppler jedoch das Telegramm erkennen. Wenn ein Bus-Koppler jedoch empfangene Telegramme Byte für Byte weiterleiten soll, dann kann der Bus-Koppler ein Telegramm vor der Weiterleitung nicht als Ganzes erkennen. Der Bus-Koppler der Erfindung nutzt dabei die Bus-Steuerungsdaten dazu, die Weiterleitung zu steuern.

Bei einer weiteren Ausbildung umfasst die Bus-Leitung einen optischen Wellenleiter. Insbesondere sind dabei die Bus-Empfangsschnittstelle und die Bus-Sendeschnittstelle des Bus-Kopplers für eine optische Kommunikation geeignet. Dadurch werden Daten vorteilhafterweise besonders schnell und breitbandig in dem Netzwerk übertragen, insbesondere zwischen mehreren, über die Bus-Leitung miteinander verbundenen Bus-Kopplern.

Insbesondere sind optische Schnittstellen des Bus-Kopplers zur datentechnischen Verbindung mittels eines Lichtwellenleiters geeignet. Je Schnittstelle ist insbesondere eine Sende- und/oder eine Empfangseinheit vorgesehen. In einem optischen Ringnetzwerk sind zumindest zwei Geräte mit ihren optischen Schnittstellen in einer Ringkonfiguration verbunden, das heißt, der optische Ausgang des ersten Geräts ist mit dem Eingang des zweiten Geräts verbunden, ferner ist der Ausgang des zweiten Geräts mit dem Eingang des ersten Geräts verbunden. Bei mehr als zwei Geräten ist der durch die Geräte gebildete Ring entsprechend erweitert.

Die Bus-Teilnehmer-Schnittstelle des Bus-Kopplers stellt insbesondere einen Dateneingang bereit, über den der Bus-Koppler Daten von zumindest einem angeschlossenen Bus-Teilnehmer-Gerät empfangen kann, und einen Datenausgang, über den der Bus-Koppler Daten an das zumindest eine angeschlossene Teilnehmer-Gerät übertragen kann.

Bei einer Weiterbildung ist die Bus-Teilnehmer-Schnittstelle dazu eingerichtet, die Teilnehmer-Eingangsdaten mittels einer kabelgebundenen Datenübertragung von dem Bus-Teilnehmer-Gerät zu empfangen. Dadurch wird vorteilhafterweise eine besonders einfache Verbindung zu verschiedenen Teilnehmern hergestellt, deren Daten über das Netzwerk übertragen werden können.

Dabei kann, insbesondere bei einem über ein optisches Ringnetzwerk betriebenen BusSystem, die Bus-Teilnehmer-Schnittstelle des Bus-Kopplers einer sogenannten *"Kupferseite"* bei der Kommunikation des Bus-Kopplers entsprechen, wobei die datentechnische Verbindung zwischen dem Bus-Koppler und dem zumindest einen angeschlossenen Bus-Teilnehmer-Gerät über eine kabelgebundene Datenleitung erfolgt. Alternativ oder zusätzlich können zwischen dem Teilnehmer-Gerät und dem Bus-Koppler andere Arten datentechnischer Verbindungen verwendet werden, insbesondere optische Datenleiter beziehungsweise Wellenleiter oder funkbasierte Übertragungsverfahren.

Bei einem Ringnetzwerk muss das Telegramm, wenn es nicht immer wieder durch das Ringnetzwerk geleitet werden soll, zu einem bestimmten Zeitpunkt aus dem Ring entfernt werden, das heißt, einer der Koppler in dem Ringnetzwerk muss die Kette der Weiterleitung unterbrechen. Das Entfernen kann dadurch erreicht werden, dass der Koppler, der das Telegramm ursprünglich gesendet hat, die Vollendung einer Runde durch das Ringnetzwerk erkennt, das heißt, er erkennt ein ursprünglich von ihm gesendetes Telegramm und entfernt es, gegebenenfalls unter zusätzlichen Bedingungen, etwa wenn ein Empfang des Telegramms durch ein angeschlossenes Zielgerät bestätigt wird. Wenn das ursprünglich sendende Gerät eines Telegramms nach dem Senden ausfällt, kann das Telegramm auf diese Weise nicht aus dem Ring entfernt werden.

Insbesondere wenn eine Byte-für-Byte-Übertragung stattfindet, etwa um ein Telegramm in dem Netzwerk zu übertragen, ist es für die Geräte in dem Netzwerk, insbesondere in einem Ringnetzwerk, üblicherweise nicht erkennbar, ob sie dasselbe Telegramm schon einmal übertragen haben.

Bei einer Ausbildung umfassen die Steuerungsdaten eine dem Bus-Koppler zugeordnete Adressierung.

Dadurch wird vorteilhafterweise im Gegensatz zu bekannten Systemen erreicht, dass der Bus-Koppler anhand einer Adressierung innerhalb des Ringnetzwerks erkennbar ist. Dies ist üblicherweise nicht der Fall, da Segmentkoppler in dem Ringnetzwerk typischerweise nur zur Übertragung von Daten genutzt werden und nicht einzeln ansprechbar beziehungsweise erkennbar sind. Das heißt insbesondere, dass der Bus-Koppler anhand der ihm zugeordneten Adressierung ansprechbar und/oder erkennbar ist, während er insbesondere für die an das Ringnetzwerk angeschlossenen Bus-Teilnehmergeräte nicht sichtbar ist.

Bei einer weiteren Ausbildung ist die Steuereinheit ferner dazu eingerichtet, das Steuersignal so zu bestimmen, dass die Weiterleitung empfangener Bus-Eingangsdaten an den weiteren Bus-Koppler ausgeführt wird, wenn die Bus-Eingangsdaten keine dem Bus-Koppler zugeordnete Adressierung umfassen. Umgekehrt wird insbesondere die Weiterleitung nicht ausgeführt, wenn die dem Bus-Koppler zugeordnete Adressierung von den Bus-Eingangsdaten umfasst ist.

Dadurch wird vorteilhafterweise die Weiterleitung besonders einfach gesteuert und gegebenenfalls begrenzt. Ein Telegramm wird insbesondere nur dann von einem Bus-Koppler weitergeleitet, wenn dieser feststellt, dass das Telegramm nicht von ihm selbst in das Netzwerk gesendet wurde. Ein Telegramm wird also aus dem Netzwerk gelöscht, wenn es eine Ringkonfiguration bereits durchlaufen hat. Hierzu werden insbesondere keine Bus-Ausgangsdaten für ein Weiterleiten der Bus-Eingangsdaten erzeugt und übertragen, wenn die Bus-Eingangsdaten die dem jeweiligen Bus-Koppler selbst zugeordnete Adressierung umfassen.

Die Steuereinheit erzeugt dabei die Bus-Ausgangsdaten insbesondere anhand der Teilnehmer-Eingangsdaten so, dass der Bus-Koppler als ursprünglicher Absender kenntlich ist. Normalerweise ist keine Adressierung der Bus-Koppler vorgesehen, da diese lediglich die Weiterleitung der Telegramme im Netzwerk durchführen und nicht selbst Adressaten der weitergeleiteten Daten sind. Bei dieser Ausbildung des Verfahrens wird das von dem Bus-Koppler in das Netzwerk geleitete Telegramm jedoch solcherart markiert, dass der Bus-Koppler das Telegramm wieder erkennt, wenn es das Netzwerk durchlaufen hat. Der Bus-Koppler kann dann die Weiterleitung des Telegramms unterbrechen, insbesondere nachdem es das Netzwerk einmal vollständig durchlaufen hat.

Als Adressierung des Bus-Kopplers kann beispielsweise die üblicherweise im Netzwerk eindeutig definierte Adresse eines angeschlossenen Bus-Teilnehmer-Geräts genutzt werden. Dem Bus-Koppler kann beispielsweise die Adresse desjenigen Bus-Teilnehmer-Geräts zugewiesen werden, von dem er die ersten Teilnehmer-Eingangsdaten zum Weiterleiten des ersten Telegramms in das Netzwerk empfängt. Diese Adressierung kann dann auch für weitere Telegramme genutzt werden, die auf der Basis von Teilnehmer-Eingangsdaten weiterer Bus-Teilnehmer-Geräte erzeugt werden, da die dem Bus-Koppler zugeordnete Adressierung lediglich für die Kommunikation mit den weiteren Bus-Kopplern genutzt wird und Konflikte bei der Adressierung ausgeschlossen sind.

Beim Weiterleiten von Daten, die der Bus-Koppler als Bus-Eingangsdaten über die Bus-Empfangsschnittstelle empfängt, werden wiederum Bus-Ausgangsdaten zur Ausgabe über die Bus-Sendeschnittstelle erzeugt und an den nächsten Bus-Koppler übertragen. Dabei können die empfangenen Bus-Eingangsdaten insbesondere direkt weitergeleitet werden oder es können neue Bus-Ausgangsdaten erzeugt werden, wobei insbesondere Bus-Steuerungsdaten neu erzeugt oder modifiziert werden können. Beispielsweise können Steuerungsdaten hinzugefügt werden, die zuvor von den Bus-Eingangsdaten nicht umfasst waren. Ferner können bereits vorhandene Bus-Steuerungsdaten geändert werden, etwa um den Wert eines Zählers oder eine Schalter-Information zu verändern, beispielsweise eine Löschungsschalter-Information, oder um ein Löschungs-Bit in einer vorgegebenen Weise zu setzen.

Bei einer Weitebildung ist die Steuereinheit ferner dazu eingerichtet, zur Weiterleitung der empfangenen Bus-Eingangsdaten modifizierte Bus-Ausgabedaten zu erzeugen. Dabei werden insbesondere von den Bus-Eingangsdaten umfasste Bus-Steuerungsdaten modifiziert.

Dadurch können vorteilhafterweise bereits erhaltene und gegebenenfalls weitergeleitete Daten mittels der Bus-Steuerungsdaten gekennzeichnet werden. Beispielsweise können die Bus-Steuerungsdaten einen Zähler umfassen, der verändert wird, wenn das Telegramm von dem Bus-Koppler weitergeleitet wird, um somit festzustellen, wie oft das Telegramm bereits weitergeleitet wurde oder wie oft es in dem Netzwerk einen bestimmten Bus-Koppler passiert hat. Insbesondere kann nach Erreichen eines bestimmten Standes des Zählers die Weiterleitung abgebrochen werden. Ein dauerndes Zirkulieren von nicht benötigten Daten in dem Ringnetzwerk kann dadurch vermieden werden, etwa wenn andere Mechanismen versagen, etwa beim Ausfall eines der beteiligten Geräte.

Bei einer Ausbildung umfassen die Bus-Steuerungsdaten ferner eine Löschungsschalter-Information, die insbesondere als Löschungs-Bit ausgebildet ist, wobei insbesondere die Steuereinheit dazu eingerichtet ist, das Steuersignal in Abhängigkeit von der Löschungsschalter-Information zu bestimmen. Eine Löschungsschalter-Information ist dabei so ausgebildet, dass durch ein Vergleichen der Löschungsschalter-Information mit einem bestimmten Wert direkt entschieden werden kann, ob die Daten weitergeleitet werden sollen oder nicht.

Dadurch wird vorteilhafterweise besonders einfach kenntlich gemacht, ob die Daten weiter im Netzwerk übertragen oder aus ihm entfernt werden sollen.

Dabei kann vorgesehen sein, dass einer der Bus-Koppler des Netzwerks als Master-Koppler ausgebildet ist. Dieser setzt beispielsweise das Löschungs-Bit, wenn er ein Telegramm weiterleitet. Durch ein Löschungs-Bit kann durch Setzen oder Nicht-Setzen besonders einfach zwischen zwei Zuständen unterschieden werden, bei denen die Daten weitergeleitet werden sollen oder nicht. Insbesondere kann ein solches Löschungs-Bit gesetzt werden, wenn der Master-Koppler Daten weiterleitet, sodass diese, wenn sie den Master-Koppler wieder erreichen, so vormarkiert sind, dass sie nicht nochmals weitergeleitet werden.

Bei einer weiteren Ausbildung ist über das Netzwerk beziehungsweise einen oder mehrere über die im Netzwerk miteinander verbundene Bus-Koppler, eine datentechnische Verbindung zwischen Bus-Teilnehmer-Geräten mittels eines *"Process Field Bus",* Profibus-DB, ausführbar. Dadurch wird vorteilhafterweise ein besonders einfacher und weit verbreiteter Standard für die Kommunikation der angeschlossenen Bus-Teilnehmer-Geräte genutzt. Bei weiteren Ausbildungen können andere Standards verwendet werden.

Insbesondere erfolgt die Weiterleitung von Daten beziehungsweise Telegrammen im Netzwerk zwischen den Bus-Kopplern ohne Einfluss auf das zur Kommunikation zwischen Bus-Teilnehmer-Geräten verwendete Protokoll. Allerdings können weitere Ausbildungen der Erfindung vorsehen, dass die Steuerung der Weiterleitung in dem Bus beziehungsweise mittels des Bus-Kopplers in das Protokoll integriert ist, beispielsweise durch eine von dem Protokoll umfasste Adressierung der Bus-Koppler.

Bei dem Verfahren zum Betreiben eines Bus-Kopplers für ein Netzwerk, insbesondere für ein optisches Ringnetzwerk, werden Teilnehmer-Eingangsdaten empfangen und anhand der empfangenen Teilnehmer-Eingangsdaten werden Bus-Ausgangsdaten erzeugt, wobei die Bus-Ausgangsdaten Bus-Steuerungsdaten umfassen. Dabei wird ferner, wenn Bus-Eingangsdaten empfangen werden, anhand der empfangenen Bus-Eingangsdaten ein Steuersignal bestimmt und anhand des bestimmten Steuersignals wird eine Weiterleitung der Bus-Eingangsdaten in dem Netzwerk ausgeführt.

Das Verfahren ist insbesondere dazu ausgebildet, den Bus-Koppler zu betreiben. Es weist daher dieselben Vorteile auf wie der erfindungsgemäße Bus-Koppler.

Die Erfindung betrifft ferner ein Netzwerk mit zumindest zwei Bus-Kopplern gemäß der obigen Beschreibung.

Die Erfindung betrifft ferner ein Verfahren zum Betreiben eines Netzwerks, insbesondere eines optischen Kreisnetzwerks. Dabei umfasst das Netzwerk zumindest zwei Bus-Koppler gemäß der obigen Beschreibung, die mittels des oben beschriebenen Verfahrens betrieben werden.

Nachfolgend wird die Erfindung anhand der anliegenden Zeichnungen näher erläutert. Es zeigen:
- Figur 1: ein Ausführungsbeispiel eines Netzwerks mit dem Bus-Koppler;
- Figur 2: ein Ausführungsbeispiel von Steuerungsdaten für den Betrieb des Bus-Kopplers;
- Figur 3: ein erstes Ausführungsbeispiel des Verfahrens zum Betreiben des Bus-Kopplers;
- Figur 4: ein zweites Ausführungsbeispiel des Verfahrens zum Betreiben des Bus-Kopplers;
- Figur 5: ein drittes Ausführungsbeispiel des Verfahrens zum Betreiben des Bus-Kopplers; und
- Figur 6: ein viertes Ausführungsbeispiel des Verfahrens zum Betreiben des Bus-Kopplers.

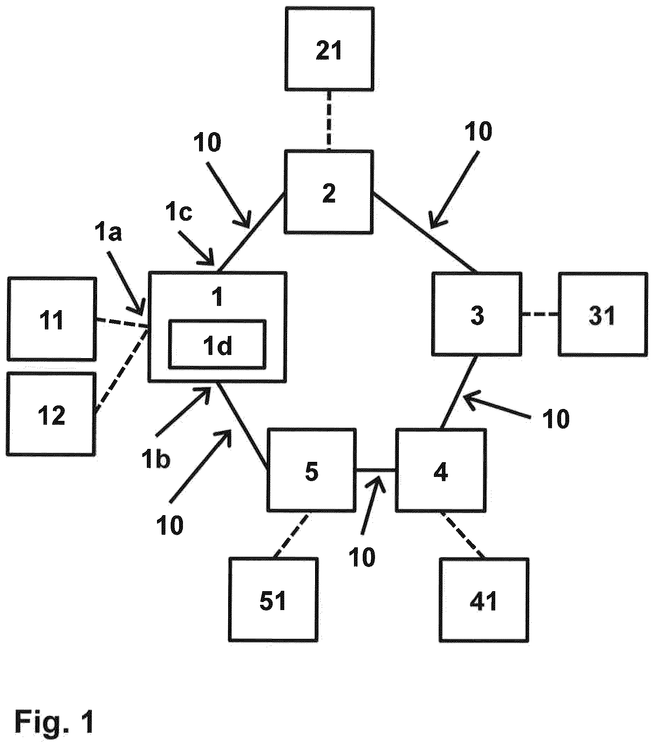

Mit Bezug zu Figur 1 wird ein Ausführungsbeispiel eines Netzwerks mit dem Bus-Koppler erläutert.

In dem Netzwerk sind Bus-Koppler 1, 2, 3, 4, 5 über eine Bus-Leitung 10 in einer Ring-Konfiguration miteinander gekoppelt, das heißt, sie sind in Reihe so gekoppelt, dass ein geschlossener Ring gebildet wird. Die Teile der Bus-Leitung 10, welche die einzelnen Bus-Koppler 1, 2, 3, 4, 5 miteinander verbinden, werden als "Bus-Segmente" bezeichnet. Die Bus-Leistung 10 ist bei dem Ausführungsbeispiel mittels optischer Wellenleiter ausgebildet, insbesondere mittels Glasfaserleitungen.

Bei dem Ausführungsbeispiel sind alle Bus-Koppler 1, 2, 3, 4, 5 prinzipiell gleich aufgebaut, allerdings ist der Aufbau im Detail nur für einen ersten Bus-Koppler 1 gezeigt. Eine Bus-Teilnehmer-Schnittstelle 1a ist dazu eingerichtet, mittels einer kabelgebundenen, *"kupferseitigen"* Kommunikation mit angeschlossenen Bus-Teilnehmer-Geräten 11, 12 eine datentechnische Verbindung herzustellen, über die Daten empfangen und gesendet werden können. Eine Bus-Empfangsschnittstelle 1b und eine Bus-Sendeschnittstelle 1c des Bus-Kopplers 1 sind dazu eingerichtet, Daten von angeschlossenen weiteren Bus-Kopplern 2, 5 zu empfangen beziehungsweise Daten an diese zu übertragen. Diese Kommunikation zwischen den Bus-Kopplern 1, 2, 3, 4, 5 erfolgt bei dem Ausführungsbeispiel über die optische Bus-Leitung 10.

Der Bus-Koppler 1 umfasst ferner eine Steuereinheit 1d, die insbesondere den Betrieb des Bus-Kopplers 1 steuert. Die Steuerung erfolgt mittels Steuersignalen, die von der Steuereinheit 1d erzeugt werden, insbesondere zur Ansteuerung der Bus-Teilnehmer-Schnittstelle 1a sowie der Bus-Empfangsschnittstelle 1b und der Bus-Sendeschnittstelle 1c.

Über die Bus-Leitung 10 sind die Bus-Koppler 1, 2, 3, 4, 5 miteinander in Reihe so gekoppelt, dass die Bus-Sendeschnittstelle 1c des ersten Bus-Kopplers mit einer entsprechenden Bus-Empfangsschnittstelle (nicht gezeigt) des zweiten Bus-Kopplers 2 gekoppelt ist, sodass über dieses Segment der Bus-Leitung 10 Daten von dem ersten 1 an den zweiten Bus-Koppler 2 gesendet werden können. Die Daten können dann von dem zweiten Bus-Koppler 2 an den dritten Bus-Koppler 3 und so weiter übertragen werden, bis sie wieder vom letzten Bus-Koppler 5 des gezeigten Netzwerks an den ersten Bus-Koppler 1 übertragen und von diesem über die Bus-Empfangsschnittstelle 1b empfangen werden.

Bei dem in Figur 1 gezeigten Netzwerk sind ferner weitere Bus-Teilnehmer-Geräte 21, 31, 41, 51 vorgesehen, die an die weiteren Bus-Koppler 2, 3, 4, 5 angeschlossen sind.

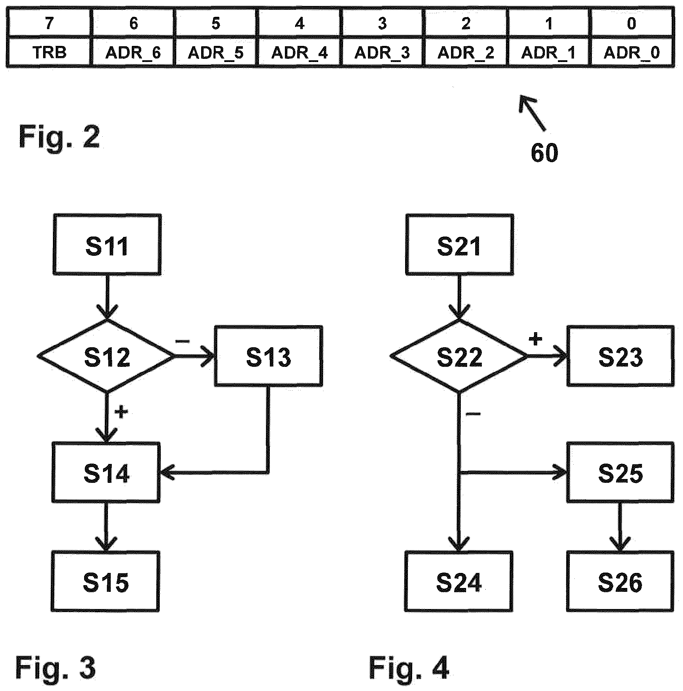

Nachfolgend wird anhand der Figuren 1 und 2 in zusammenfassender Weise erläutert, wie Daten in dem in Figur 1 gezeigten Ausführungsbeispiel eines Netzwerks übertragen werden können. Dabei wird von dem oben mit Bezug zu Figur 1 erläuterten Ausführungsbeispiel eines Netzwerks mit dem Bus-Koppler 1 ausgegangen.

Ein Bus-Teilnehmer-Gerät 11 sendet Teilnehmer-Eingangsdaten über die als *"Kupferseite"* ausgebildete Bus-Teilnehmer-Schnittstelle 1a zum Bus-Koppler 1. Dies erfolgt über eine Kabel-Verbindung, insbesondere ein Metallkabel. Bei weiteren Ausführungsbeispielen kann die Datenübertragung auf andere Weise erfolgen. Die Teilnehmer-Eingangsdaten umfassen etwa Daten eines Messwertes, der von dem Bus-Teilnehmer-Gerät 11 erfasst wird, oder Daten zum Anfordern von weiteren Daten von einem anderen Bus-Teilnehmer-Gerät 12, 21, 31, 41, 51 oder zum Ansteuern eines anderen Bus-Teilnehmer-Geräts 12, 21, 31, 41, 51.

Die Steuereinheit 1d des Bus-Kopplers 1 erzeugt Bus-Ausgangsdaten, die bei dem Ausführungsbeispiel die Teilnehmer-Eingangsdaten umfassen, welche als sogenanntes "Telegramm" über den Bus beziehungsweise über die Bus-Leitung 10 übertragen werden sollen, insbesondere an eines der weiteren Bus-Teilnehmer-Geräte 21, 31, 41, 51. Ferner umfassen die Bus-Ausgangsdaten Bus-Steuerungsdaten zur Steuerung der Übertragung in dem Netzwerk und durch die Bus-Koppler 1, 2, 3, 4, 5, wobei bei dem Ausführungsbeispiel die Bus-Steuerungsdaten ein "Steuerungsbyte" umfassen, welches weiter unten mit Bezug zu Figur 2 näher erläutert wird. Dieses Steuerungsbyte wird direkt vor das zu übertragende Telegramm gesetzt. Zwischen den Telegrammen, die in dem Ringnetzwerk übertragen werden, ist üblicherweise eine Lücke von 1,5 Byte vorgesehen und bei dem Ausführungsbeispiel wird das Steuerungsbyte in diese Lücke eingesetzt, beziehungsweise diese Lücke wird durch das Steuerungsbyte entsprechend verkleinert.

Bei dem Ausführungsbeispiel erfolgt die Weiterleitung der Daten byteweise, das heißt, der Bus-Koppler 1 leitet jedes empfangene Byte direkt weiter. Bei weiteren Ausführungsbeispielen kann die Weiterleitung in anderer Weise erfolgen, etwa in Paketen eines größeren Datenvolumens.

Das Steuerungsbyte 60 ist bei dem Ausführungsbeispiel wie in Figur 2 gezeigt aufgebaut: Es umfasst 8 Bit, von denen 7 Bit dazu verwendet werden, eine dem Bus-Koppler 1 zugeordnete Adressierung aufzunehmen, was in der Figur 2 durch die Bezeichnung der Bits "ADR_0" bis "ADR_6" dargestellt ist. Ferner ist ein "TRB" vorgesehen, das als Löschungsschalter-Information fungiert. Dabei steht TRB für *"telegram remove bit"* und dieses Bit wird gesetzt je nachdem, ob das dem Steuerungsbyte 60 nachfolgende Telegramm im Netzwerk weitergeleitet werden soll oder nicht. Insbesondere entscheidet der bus-Koppler 1 nach Auswertung des TRB direkt, ob das Telegramm weitergeleitet wird.

Die dem Bus-Koppler 1 zugeordnete Adressierung wird bei dem Verfahren anhand von Daten bestimmt, die der Bus-Koppler 1 von den angeschlossenen Bus-Teilnehmer-Geräten 11, 12 empfängt. Dabei umfassen die von den Bus-Teilnehmer-Geräten 11, 12 empfangenen Daten jeweils Informationen über eine Adressierung dieser Bus-Teilnehmer-Geräte 11, 12, die diesen im Netzwerk als eindeutige Identifikation zugeteilt wird. Der Bus-Koppler 1 übernimmt bei dem Ausführungsbeispiel die Adressierung desjenigen Bus-Teilnehmer-Geräts 11, 12, von dem er die ersten Daten erhält, für sich selbst.

Die Adressierung des Bus-Kopplers 1 wird lediglich für die Zwecke der Weiterleitung von Daten über die Bus-Leitung 10 verwendet, insbesondere als "Ringadresse" des Bus-Kopplers 1, sodass sie für die im Netzwerk angeschlossenen Bus-Teilnehmer-Geräte 11, 12, 21, 31, 41, 51 "unsichtbar" bleibt, sodass insbesondere die Adressierung im Netzwerk der Bus-Teilnehmer-Geräte 11, 12, 21, 31, 41, 51 untereinander eindeutig zuzuordnen ist. Beim Bestimmen der dem Bus-Koppler 1 zugeordneten Adressierung wird darauf geachtet, dass diese in den bei dem Ausführungsbeispiel 7 Bit des Steuerungsbytes 60 gespeichert werden kann; gegebenenfalls wird die Adressierung bei weiteren Beispielen auf andere Weise so bestimmt, dass sie in dem Steuerungsbyte 60 gespeichert werden kann. Die Adressierung bleibt dem Bus-Koppler 1 insbesondere dauerhaft und/oder bis zu einem Spannungs-Reset erhalten.

Ferner steuert die Steuereinheit 1d den Bus-Koppler 1 so, dass vom vorhergehenden Bus-Koppler 5 empfangene Daten weitergeleitet werden können. Mittels der Bus-Empfangsschnittstelle 1b werden Bus-Eingangsdaten empfangen. Anhand der Bus-Eingangsdaten werden die davon umfassten Bus-Steuerungsdaten erfasst und es wird bestimmt, ob die Voraussetzungen für ein Weiterleiten der Daten erfüllt sind. Insbesondere wird hierzu das Steuerungsbyte analysiert und überprüft. Sind die Bedingungen für eine Weiterleitung erfüllt beziehungsweise sind keine Löschungsbedingungen erfüllt, so werden Bus-Ausgangsdaten erzeugt, wobei im einfachsten Falle die empfangenen Bus-Eingangsdaten unverändert weitergeleitet und von der Bus-Sendeschnittstelle 1c an den nächsten Bus-Koppler 2 gesendet werden. Gegebenenfalls werden dabei die Bus-Steuerungsdaten beziehungsweise das Steuerungsbyte modifiziert.

Bei dem Ausführungsbeispiel ist als Löschungsbedingung vorgesehen, dass ein Telegramm nicht weitergeleitet wird, wenn die von dem empfangenen Steuerungsbyte umfasste Adressierung mit der dem Bus-Koppler 1 selbst zugeordneten Adressierung übereinstimmt. Es wird also erkannt, ob der Bus-Koppler 1 das Telegramm selbst in das Netzwerk weitergeleitet hat und in diesem Fall wird das Telegramm nicht mehr weitergeleitet.

Mit Bezug zu Figur 3 wird ein erstes Ausführungsbeispiel des Verfahrens zum Betreiben des Bus-Kopplers erläutert. Dabei wird von den obigen Ausführungen ausgegangen und gleiche oder ähnliche Elemente werden nicht neu im Detail beschrieben.

In einem Schritt S11 empfängt der Bus-Koppler 1 Teilnehmer-Eingangsdaten von einem der angeschlossenen Bus-Teilnehmer-Geräte 11, 12. Die Teilnehmer-Eingangsdaten umfassen ein sogenanntes "Telegramm" mit Daten, die über die Bus-Leitung 10 an eines der anderen an der Netzwerk angeschlossenen Bus-Teilnehmer-Geräte 11, 12, 21, 31, 41, 51 übertragen werden sollen. Bei dem Ausführungsbeispiel erfolgt diese Übertragung mittels eines Profibus-DB-Protokolls.

In einem Schritt S12 prüft die Steuereinheit 1d, ob der Bus-Koppler 1 bereits über eine Ringadresse verfügt, das heißt, ob dem Bus-Koppler 1 eine Adressierung zugeordnet ist. Ist dies nicht der Fall, so wird in einem Schritt S13 anhand der empfangenen Teilnehmer-Eingangsdaten eine Adressierung bestimmt: Die Teilnehmer Eingangsdaten umfassen Informationen über eine Netzwerkadresse des Bus-Teilnehmer-Geräts 11, 12, von dem die Teilnehmer-Eingangsdaten stammen. Das heißt insbesondere, dem Bus-Koppler 1 wird eine Adressierung zugewiesen, die der Netzwerkadresse des ersten Bus-Teilnehmer-Geräts 11, 12 entspricht, von dem er Teilnehmer-Eingangsdaten empfängt.

In einem Schritt S14 werden Bus-Steuerungsdaten erzeugt, die bei dem Ausführungsbeispielen aus einem Steuerungsbyte bestehen. In dem Steuerungsbyte ist die dem Bus-Koppler 1 zugeordnete Adressierung gespeichert. Die Bus-Steuerungsdaten werden vor das Telegramm gesetzt. Das heißt, die Bus-Ausgangsdaten umfassen das Steuerungsbyte und das zu übertragende Telegramm.

In einem weiteren Schritt S15 werden die so erzeugten Bus-Ausgangsdaten über die Bus-Sendeschnittstelle 1c an den nächsten Bus-Koppler 2 übertragen.

Mit Bezug zu Figur 4 wird ein zweites Ausführungsbeispiel des Verfahrens zum Betreiben des Bus-Kopplers erläutert. Dabei wird von den obigen Ausführungen ausgegangen und gleiche oder ähnliche Elemente werden nicht neu im Detail beschrieben.

In einem Schritt S21 empfängt der Bus-Koppler 1 Bus-Eingangsdaten über die Bus-Empfangsschnittstelle 1b. Die Bus-Eingangsdaten sind insbesondere entsprechend den oben in Schritt S15 gesendeten Bus-Ausgangsdaten gebildet, das heißt, sie umfassen Bus-Steuerungsdaten, insbesondere ein Steuerungsbyte, und ein Telegramm.

In einem Schritt S22 wird geprüft, ob die Steuerungsdaten eine Adressierung umfassen, die der eigenen Ringadresse des Bus-Kopplers 1 entspricht.

Ist dies der Fall, so wird in einem Schritt S23 keine Weiterleitung ausgeführt. Das heißt, wenn festgestellt wird, dass ein Telegramm einen ganzen Umlauf durch das Ringnetzwerk vollendet hat, wird das Telegramm aus dem Netzwerk gelöscht beziehungsweise nicht mehr weitergeleitet.

Wird dagegen keine der eigenen Ringadresse entsprechende Adressierung festgestellt, so wird in einem Schritt S24 das Telegramm weitergeleitet. Bei diesem Ausführungsbeispiel erfolgt hierzu die Weiterleitung "Byte für Byte" und unverändert durch Senden über die Bus-Sendeschnittstelle 1c an den nächsten Bus-Koppler 2.

Ferner wird das Telegramm an die angeschlossenen Bus-Teilnehmergeräte 11, 12 übertragen. Hierzu werden in einem Schritt S25 die Bus-Steuerungsdaten entfernt und das Telegramm wird in einem Schritt S26 über die Bus-Teilnehmer-Schnittstelle 1a an die Bus-Teilnehmergeräte 11, 12 gesendet.

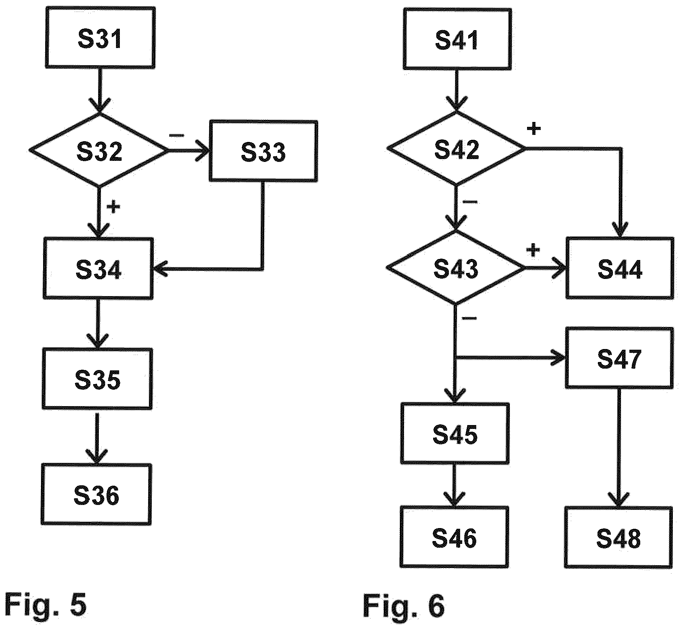

Mit Bezug zu Figur 5 wird ein drittes Ausführungsbeispiel des Verfahrens zum Betreiben des Bus-Kopplers erläutert. Dabei wird von den obigen Ausführungen ausgegangen und gleiche oder ähnliche Elemente werden nicht neu im Detail beschrieben.

Das in Figur 5 gezeigte dritte Ausführungsbeispiel entspricht im Wesentlichen dem ersten Ausführungsbeispiel der Figur 3. Allerdings übernimmt der Bus-Koppler 1 hier eine zusätzliche Funktion als sogenannter "Ring-Master", das heißt als ein Gerät zum übergeordneten Steuern der Weiterleitung von Telegrammen in dem Netzwerk. In einem derartigen System kann ein Bus-Koppler 1, der zur Ausführung des Verfahrens wie in Figur 3 konfiguriert ist, als "Ring-Slave" definiert sein.

In einem Schritt S31 werden Teilnehmer-Eingangsdaten über die Bus-Teilnehmer-Schnittstelle 1a empfangen. In einem Schritt S32 wird überprüft, ob dem Bus-Koppler 1 bereits eine Adressierung zugeordnet ist und nötigenfalls erfolgt die Zuordnung wie oben beschrieben in einem Schritt S33. In einem Schritt S34 werden Bus-Ausgangsdaten wie oben beschrieben erzeugt, wobei vor das zu übertragende Telegramm ein Steuerungsbyte gesetzt wird.

Anders als bei dem oben beschriebenen ersten Ausführungsbeispiel des Verfahrens wird nun in einem Schritt S35 in dem Steuerungsbyte das TRB *(telegram remove bit)* gesetzt. Dieses Setzen des TRB entspricht bei diesem Ausführungsbeispiel der Information, dass das Telegramm beim nächsten Auswerten des TRB nicht mehr weitergeleitet werden soll, dass also das Telegramm aus dem Ringnetzwerk entfernt werden soll.

In einem Schritt S36 schließlich werden die Bus-Ausgangsdaten über die Bus-Sendeschnittstelle 1c über die Bus-Leitung 10 an den nächsten Bus-Koppler 2 übertragen.

Mit Bezug zu Figur 6 wird ein viertes Ausführungsbeispiel des Verfahrens zum Betreiben des Bus-Kopplers erläutert. Dabei wird von den obigen Ausführungen ausgegangen und gleiche oder ähnliche Elemente werden nicht neu im Detail beschrieben.

Das in Figur 6 gezeigte vierte Ausführungsbeispiel entspricht im Wesentlichen dem zweiten Ausführungsbeispiel der Figur 4. Allerdings übernimmt der Bus-Koppler 1 auch hier die Funktion des "Ring-Master" und führt eine übergeordnete Steuerung der Weiterleitung von Telegrammen in dem Netzwerk aus. In einem derartigen System kann ein Bus-Koppler 1, der zur Ausführung des Verfahrens wie in Figur 4 konfiguriert ist, als "Ring-Slave" definiert sein.

In einem Schritt S41 werden Bus-Eingangsdaten über die Bus-Empfangsschnittstelle 1b empfangen. In einem Schritt S42 wird überprüft, ob die von den Bus-Eingangsdaten umfassten Informationen über eine Adressierung der eigenen Ringadresse des Bus-Kopplers 1 entsprechen. Ist dies der Fall, so wird in einem Schritt S44 das Telegramm nicht weitergeleitet.

Ferner wird in einem Schritt S43 geprüft ob das TRB gesetzt ist, das heißt, ob der Ring-Master bereits zuvor das Telegramm gesendet oder weitergeleitet hat. Ist das TRB gesetzt, so wird ebenfalls im Schritt S44 das Telegramm nicht weitergeleitet.

Ist dagegen das TRB nicht gesetzt, so wird es nun in einem Schritt S45 gesetzt, ehe in einem Schritt S46 die Weiterleitung mittels Bus-Ausgangsdaten über die Bus-Sendeschnittstelle 1c erfolgt.

Ferner werden bei nicht gesetztem TRB in einem Schritt S47 die Bus-Steuerungsdaten entfernt und es erfolgt in einem Schritt S48 eine Ausgabe des Telegramms an die angeschlossenen Bus-Teilnehmer-Geräte 11, 12 über die Bus-Teilnehmer-Schnittstelle 1a.

Das TRB kann bei der oben beschriebenen Verwendung als Zähler aufgefasst werden, der zwischen 0 und 1 unterscheidet. Nach dem Erreichen eines vollen Umlaufs wird das Telegramm aus dem Ringnetzwerk gelöscht. Bei weiteren Ausführungsbeispielen kann ferner vorgesehen sein, dass die Bus-Steuerungsdaten einen anders gebildeten Zähler umfassen, durch den beispielsweise eine größere Anzahl von Durchläufen oder einzelner Weiterleitungsvorgänge gezählt wird; dazu wird der Zähler erhöht, wenn er von einem geeignet konfigurierten Bus-Koppler 1, 2, 3, 4, 5 weitergeleitet wird. Nach dem Erreichen eines bestimmten Schwellenwerts wird das Weiterleiten unterbrochen. Auch dies kann der Absicherung dagegen dienen, dass unnötige Weiterleitungen durchgeführt werden, etwa weil eines der beteiligten Geräte ausfällt.

### Bezugszeichenliste

1 Bus-Koppler
1a Bus-Teilnehmer-Schnittstelle
1b Bus-Empfangsschnittstelle
1c Bus-Sendeschnittstelle
1d Steuereinheit
2, 3, 4, 5 weiterer Bus-Koppler
10 Bus-Leitung
11, 12 Bus-Teilnehmer-Gerät
21, 31, 41, 51 weiteres Bus-Teilnehmer-Gerät
60 Bus-Steuerungsdaten; Steuerungsbyte
S11, S12, S13, S14, S15 Schritt
S21, S22, S23, S24, S25, S26 Schritt
S31, S32, S33, S34, S35, S36 Schritt
S41, S42, S43, S44, S45, S46, S47, S48 Schritt

## Patentansprüche

1. Bus-Koppler (1) für ein Netzwerk, insbesondere für ein optisches Ringnetzwerk, umfassend
eine Bus-Teilnehmer-Schnittstelle (1a) zum datentechnischen Verbinden mit zumindest einem Bus-Teilnehmer-Gerät (11, 12);
eine Bus-Empfangsschnittstelle (1b) zum Empfangen von Bus-Eingangsdaten über eine Bus-Leitung (10); und
eine Bus-Sendeschnittstelle (1c) zum Senden von Bus-Ausgangsdaten über die Bus-Leitung (10); sowie
eine Steuereinheit (1d), die dazu eingerichtet ist, anhand von über die Bus-Teilnehmer-Schnittstelle (1a) empfangenen Teilnehmer-Eingangsdaten Bus-Ausgangsdaten zu erzeugen, wobei die Bus-Ausgangsdaten Bus-Steuerungsdaten umfassen, und mittels der Bus-Sendeschnittstelle (1c) an einen weiteren Bus-Koppler (2) zu übertragen; wobei
die Steuereinheit (1d) ferner dazu eingerichtet ist, anhand der mittels der Bus-Empfangsschnittstelle (1b) empfangenen Bus-Eingangsdaten, die Bus-Steuerungsdaten umfassen, ein Steuersignal zu bestimmen und anhand des bestimmten Steuersignals eine Weiterleitung der Bus-Eingangsdaten an den weiteren Bus-Koppler (2) auszuführen,
**dadurch gekennzeichnet, dass**
die Steuereinheit (1d) ferner dazu eingerichtet ist, die mittels der Bus-Empfangsschnittstelle (1b) empfangenen Bus-Eingangsdaten in Abhängigkeit von dem Steuersignal byteweise an den weiteren Bus-Koppler (2) zu übertragen, sodass die Weiterleitung der Daten byteweise erfolgt.

2. Bus-Koppler (1) gemäß Anspruch 1,
**dadurch gekennzeichnet, dass**
die Bus-Leitung (10) einen optischen Wellenleiter umfasst.

3. Bus-Koppler (1) gemäß einem der vorhergehenden Ansprüche,
**dadurch gekennzeichnet, dass**
die Bus-Teilnehmer-Schnittstelle (1a) dazu eingerichtet ist, die Teilnehmer-Eingangsdaten mittels einer kabelgebundenen Datenübertragung von dem Bus-Teilnehmer-Gerät (11, 12) zu empfangen.

4. Bus-Koppler (1) gemäß einem der vorhergehenden Ansprüche,
**dadurch gekennzeichnet, dass**
die Steuerungsdaten eine dem Bus-Koppler (1) zugeordnete Adressierung umfassen.

5. Bus-Koppler (1) gemäß Anspruch 4,
**dadurch gekennzeichnet, dass**
die Steuereinheit (1d) ferner dazu eingerichtet ist, das Steuersignal so zu bestimmen, dass die Weiterleitung empfangener Bus-Eingangsdaten an den weiteren Bus-Koppler (2) ausgeführt wird, wenn die Bus-Eingangsdaten keine dem Bus-Koppler (1) zugeordnete Adressierung umfassen.

6. Bus-Koppler (1) gemäß einem der vorhergehenden Ansprüche,
**dadurch gekennzeichnet, dass**
die Steuereinheit (1d) ferner dazu eingerichtet ist, zur Weiterleitung der empfangenen Bus-Eingangsdaten modifizierte Bus-Ausgangsdaten zu erzeugen; wobei
insbesondere von den Bus-Eingangsdaten umfasste Bus-Steuerungsdaten modifiziert werden.

7. Bus-Koppler (1) gemäß einem der vorhergehenden Ansprüche,
**dadurch gekennzeichnet, dass**
die Bus-Steuerungsdaten ferner eine Löschungsschalter-Information umfassen, die insbesondere als Löschungs-Bit (60) ausgebildet ist; wobei
insbesondere die Steuereinheit (1d) dazu eingerichtet ist, das Steuersignal in Abhängigkeit von der Löschungsschalter-Information zu bestimmen.

8. Bus-Koppler (1) gemäß einem der vorhergehenden Ansprüche,
**dadurch gekennzeichnet, dass**
über das Netzwerk eine datentechnische Verbindung zwischen Bus-Teilnehmer-Geräten (11, 12, 21, 31, 41, 51) mittels eines *"Process Field Bus",* Profibus-DB, ausführbar ist.

9. Verfahren zum Betreiben eines Bus-Kopplers (1) für ein Netzwerk, insbesondere für ein optisches Ringnetzwerk, wobei
Teilnehmer-Eingangsdaten empfangen werden;
anhand der empfangenen Teilnehmer-Eingangsdaten Bus-Ausgangsdaten erzeugt werden; wobei
die Bus-Ausgangsdaten Bus-Steuerungsdaten umfassen; wobei ferner, wenn Bus-Eingangsdaten empfangen werden, anhand der empfangenen Bus-Eingangsdaten ein Steuersignal bestimmt wird und anhand des bestimmten Steuersignals eine Weiterleitung der Bus-Eingangsdaten in dem Netzwerk ausgeführt wird;
**dadurch gekennzeichnet, dass**
die empfangenen Bus-Eingangsdaten in Abhängigkeit von dem Steuersignal byteweise an einen weiteren Bus-Koppler (5) übertragen werden, sodass die Weiterleitung der Daten byteweise erfolgt.

## Claims

1. Bus coupler (1) for a network, in particular for an optical ring network, comprising
a bus participant interface (1a) for data connection to at least one bus participant device (11, 12);
a bus receiving interface (1b) for receiving bus input data via a bus line (10); and
a bus transmitting interface (1c) for transmitting bus output data via the bus line (10); and
a control unit (1d), which is configured to generate bus output data based on participant input data received via the bus participant interface (1a), wherein the bus output data comprise bus control data, and to transfer them to a further bus coupler (2) by means of the bus transmitting interface (1c); wherein
the control unit (1d) is further configured to determine a control signal based on the bus input data, which comprise bus control data, received by means of the bus receiving interface (1b) and to perform a relaying of the bus input data to the further bus coupler (2) based on the determined control signal,
**characterized in that**
the control unit (1d) is further configured to transfer the bus input data received by means of the bus receiving interface (1b) to the further bus coupler (2) one byte at a time depending on the control signal, with the result that the relaying of the data is effected one byte at a time.

2. Bus coupler (1) according to claim 1,
**characterized in that**
the bus line (10) comprises an optical waveguide.

3. Bus coupler (1) according to one of the preceding claims,
**characterized in that**
the bus participant interface (1a) is configured to receive the participant input data from the bus participant device (11, 12) by means of a wired data transfer.

4. Bus coupler (1) according to one of the preceding claims,
**characterized in that**
the control data comprise an addressing allocated to the bus coupler (1).

5. Bus coupler (1) according to claim 4,
**characterized in that**
the control unit (1d) is further configured to determine the control signal such that the relaying of received bus input data to the further bus coupler (2) is performed if the bus input data do not comprise an addressing allocated to the bus coupler (1).

6. Bus coupler (1) according to one of the preceding claims,
**characterized in that**
the control unit (1d) is further configured to generate modified bus output data for the relaying of the received bus input data, wherein
in particular bus control data comprised by the bus input data are modified.

7. Bus coupler (1) according to one of the preceding claims,
**characterized in that**
the bus control data further comprise an item of deletion switch information, which is formed in particular as a deletion bit (60), wherein
in particular the control unit (1d) is configured to determine the control signal depending on the item of deletion switch information.

8. Bus coupler (1) according to one of the preceding claims,
**characterized in that,**
via the network, a data connection between bus participant devices (11, 12, 21, 31, 41, 51) can be performed by means of a *"Process Field Bus",* Profibus-DB.

9. Method for operating a bus coupler (1) for a network, in particular for an optical ring network, wherein
participant input data are received;
bus output data are generated based on the received participant input data, wherein
the bus output data comprise bus control data, wherein further,
when bus input data are received, a control signal is determined based on the received bus input data and a relaying of the bus input data in the network is performed based on the determined control signal,
**characterized in that**
the received bus input data are transferred one byte at a time to a further bus coupler (5) depending on the control signal, with the result that the relaying of the data is effected one byte at a time.

## Revendications

1. Coupleur de bus (1) pour un réseau, notamment pour un réseau optique en anneau, comprenant :
une interface de participant de bus (1a) permettant de relier sur le plan technique des données à au moins un appareil de participant de bus (11, 12) ;
une interface de réception de bus (1b) pour recevoir des données d'entrée de bus via un câble de bus (10) ; et
une interface d'émission de bus (1c) permettant d'envoyer des données de sortie de bus via le câble de bus (10) ; ainsi que
une unité de commande (1d) qui est conçue pour produire des données de sortie de bus à l'aide des données d'entrée de participant reçues via l'interface de participant de bus (1a), les données de sortie de bus comprenant des données de commande de bus et pour les transmettre à un coupleur de bus (2) supplémentaire à l'aide de l'interface d'émission de bus (1c) ;
l'unité de commande (1d) étant en outre conçue pour déterminer un signal de commande à l'aide des données d'entrée de bus reçues à l'aide de l'interface de réception de bus (1b) comprenant les données de commande de bus et pour exécuter une redirection des données d'entrée de bus au coupleur de bus (2) supplémentaire à l'aide du signal de commande déterminé ;
**caractérisé en ce que** :
l'unité de commande (1d) est en outre conçue pour envoyer par bits les données d'entrée de bus reçues au moyen de l'interface de réception de bus (1b) au coupleur de bus (2) supplémentaire, en fonction du signal de commande, de sorte que la redirection des données s'effectue par bits.

2. Coupleur de bus (1) selon la revendication 1, **caractérisé en ce que** le câble de bus (10) comprend un conducteur d'ondes optiques.

3. Coupleur de bus (1) selon l'une quelconque des revendications précédentes, **caractérisé en ce que** l'interface de participant de bus (1a) est conçue pour recevoir les données d'entrée de participant au moyen d'une transmission de données par câble depuis l'appareil de participant de bus (11, 12).

4. Coupleur de bus (1) selon l'une quelconque des revendications précédentes, **caractérisé en ce que** les données de commande comprennent un adressage associé au coupleur de bus (1).

5. Coupleur de bus (1) selon la revendication 4, **caractérisé en ce que** l'unité de commande (1d) est en outre conçue pour définir de telle sorte le signal de commande que la redirection des données d'entrée de bus reçues est réalisée au niveau du coupleur de bus (2) supplémentaire lorsque les données d'entrée de bus ne comprennent pas d'adressage associé au coupleur de bus (1).

6. Coupleur de bus (1) selon l'une quelconque des revendications précédentes, **caractérisé en ce que** :
l'unité de commande (1d) est en outre conçue pour produire les données de sortie de bus modifiées pour la redirection des données d'entrée de bus reçues ;
dans lequel les données de commande de bus comprenant notamment les données d'entrée de bus sont modifiées.

7. Coupleur de bus (1) selon l'une quelconque des revendications précédentes, **caractérisé en ce que** les données de commande de bus comprennent en outre une information de contacteur de suppression notamment réalisé sous la forme d'un bit de suppression (60) ;
dans lequel l'unité de commande (1d) est notamment conçue pour définir le signal de commande en fonction de l'information de contacteur de suppression.

8. Coupleur de bus (1) selon l'une quelconque des revendications précédentes, **caractérisé en ce qu'**une liaison technique de données peut être établie entre les appareils de participant de bus (11, 12, 21, 31, 41, 51) via le réseau à l'aide d'un bus de type « Process Field Bus », Profibus DB.

9. Procédé d'exploitation d'un coupleur de bus (1) pour un réseau, notamment pour un réseau optique en anneau, dans lequel :
des données d'entrée de participant sont reçues ;
des données de sortie de bus sont produites à l'aide des données d'entrée de participant reçues ;
les données de sortie de bus comprennent des données de commande de bus ;
un signal de commande étant en outre défini à l'aide des données d'entrée de bus reçues lorsque des données d'entrée de bus sont reçues et une redirection des données d'entrée de bus dans le réseau étant réalisée à l'aide du signal de commande défini ;
**caractérisé en ce que** :
les données d'entrée de bus reçues sont transmises à un coupleur de bus (5) supplémentaire en fonction du signal de commande, de sorte que la redirection des données s'effectue par bits.
